# EUROPEAN PATENT APPLICATION

(11) **EP 2 186 942 A1**
(43) Date of publication of application: **19.05.2010**
(21) Application number: 08764206.2
(22) Date of filing: 23.06.2008
(51) Int. Cl.: E01C 13/08, B02C 18/14, B02C 18/18, E01C 23/12

(54) **METHOD OF REPLACING ARTIFICIAL LAWN AND ARTIFICIAL LAWN DISPOSAL APPARATUS**

(30) Priority: 10.08.2007 JP 2007210540
(71) Applicant: Kuriyama Corporation, Osaka 532-0011 (JP); Miike Tekkou Kabushikigaisha, Fukuyama-shi, Hiroshima 720-2124 (JP); Osaka Sharyou Kougyou Kabushikigaisya, Osaka-shi, Osaka 559-0031 (JP); Mondo S.p.A., 12051 Alba Frazione Gallo (CN) (IT)
(72) Inventor: UEDA, Yasuo, Osaka-shi Osaka 532-0011 (JP); KONUKI, Shigehiko, Osaka-shi Osaka 532-0011 (JP); MIYAKE, Satoshi, Osaka-shi Osaka 532-0011 (JP); KOBAYASHI, Yoshikazu, Fukuyama-shi Hiroshima 720-2124 (JP); TAKENAKA, Takahiro, Osaka-shi Osaka 559-0031 (JP); KUWANA, Minoru, Osaka-shi Osaka 559-0031 (JP)
(74) Representative: Vossius & Partner
(86) International application number: PCT/JP2008/001623
(87) International publication number: WO 2009/022447

(57) **Abstract**

Existing artificial turf filled with filler is removed from a laying surface, and the removed artificial turf is processed by a movable artificial turf processing apparatus placed adjacent to the laying surface. The artificial turf processing apparatus has a one-shaft type shredder 11 for shredding artificial turf, a centrifugal-type segregator 12 for segregating shredded pieces of artificial turf bodies and the filler, and a band type drier 13 for drying the filler, which are installed on a pedestal 10 of a large truck. The filler is recovered from the artificial turf in vicinity of the laying surface, and thus labor and a cost for transporting the artificial turf to a shredding station, a processing station and/or the like can be reduced. The recovery of the filler from the artificial turf in vicinity of the laying surface makes it possible to quickly obtain filler for use in new artificial turf and thus reduces a term of a work of the replacement.

## Description

### BACKGROUND OF THE INVENTION

The present invention relates to a method of replacing existing artificial turf laid in a soccer stadium, for instance, and relates to an artificial turf processing apparatus for use in the method.

For athletic facilities such as soccer stadium has been employed artificial turf filled with filler such as natural sand and elastic chips between resin pile. Artificial turf of this type has rapidly been coming into wide use because of a touch thereof close to natural one and less labor required for maintenance thereof than of natural one. In such artificial turf, pile, base fabrics and the like are formed of polyethylene, polypropylene or the like, and the pile is fixed to the base fabrics by latex-based adhesive. There are some examples in which rubber chips obtained from recycling of waste tires or the like are used as the elastic chips of the filler.

Artificial turf, of which regeneration is not expected as opposed to natural turf, requires replacement according to degrees of degradation, wear and the like. Replacement of artificial turf poses a problem of processing of waste artificial turf. Waste artificial turf is often removed from a laying surface and disposed as industrial waste, and thus various methods of processing the waste have been proposed in view of influence to environment, effective utilization of resources, and the like.

Among methods of replacing artificial turf with consideration for disposal of waste artificial turf is a so-called overlay replacing method in which new artificial turf is laid on existing artificial turf without removal thereof. The replacing method, however, has disadvantages such as unevenness that may be formed on a surface of a top layer of artificial turf by underlying layers of artificial turf and that may cause deterioration in drainage capacity for rainwater, obstacles to games, and the like. A number of stacked layers of artificial turf is limited to two in consideration of influence of the unevenness, and thus degradation of a second layer of artificial turf inevitably leads to removal of all the layers of artificial turf. That is, the method is nothing but a postponement of processing of a first layer of artificial turf.

Among methods of processing waste artificial turf are those in which artificial turf removed from a laying surface is segregated into component materials, which are obtained as recycled materials. In a method among such methods, removed artificial turf is cut by a circular saw or the like, washed in water for removal of filler, and thereafter shredded into chips, and the shredded turf is immersed in hot water and is stirred for about one week so that adhesive is deteriorated (e.g., JP 2002-192120 A). The shredded turf having undergone the deterioration processing is dried, additionally shredded, passed through sieves, and segregated into thermoplastic resin forming pile and base fabrics and non-thermoplastic adhesive. Such segregation into the non-thermoplastic resin that is not fluidized by being heated allows the thermoplastic resin to be utilized for recycled moldings having good quality.

In another method of obtaining recycled materials from waste artificial turf, artificial turf filled with sand is wound like a roll, removed from a laying surface, and fed into a shredder so that pile and base fabrics are cut and so that segregation into the pile and base fabrics and the sand is fulfilled (e.g., JP 2007-132116 A). The shredder used in the method is a so-called two-shaft type shredder which has two rotation shafts to be driven in opposite directions, in which a plurality of shredding blades are fixed onto an outer circumferential surface of each rotation shaft, and which is formed so that the shredding blades on one of the rotation shaft and the shredding blades on the other rotation shaft mesh with each other. The artificial turf cut and discharged by and from the shredder is dropped onto a net-like conveyor, and then shredded pieces of the pile and base fabrics are received on the net-like conveyor, while the sand passes through the net-like conveyor and is accommodated in a container below. The shredder is provided in a shredding station, and the artificial turf wound like rolls is transported from a laying site to the shredding station for the shredding processing and segregation processing.

### SUMMARY OF THE INVENTION

### PROBLEMS TO BE SOLVED BY THE INVENTION

The artificial turf processing method with the segregation into the pile and base fabrics of thermoplastic resin and the non-thermoplastic adhesive has a problem in that the processing requires much time because the shreds are immersed in hot water and is stirred for about one week for deterioration of the adhesive. The method is inconvenient in that a large number of steps required between the cutting and the segregation result in much labor and in that a complicated configuration of a processing apparatus leads to increase in cost. Thus a problem is caused in that increase in prices of recycled materials makes it difficult to actually use the recycled. In particular, recycled materials of non-thermoplastic resin have limited applications and thus are hardly expected to be used.

The complicated configuration of the processing apparatus requires a processing station in a scale that is large to a certain degree. Accordingly, it is necessary to transport the artificial turf from a site where the artificial turf has been laid to the processing station, and thus a problem is caused in that the transportation requires much labor and a high cost. On condition that the artificial turf contains rainwater, increase in weight of the turf that is caused by a water retaining function of the filler leads to further increase in the labor and cost for the transportation.

In the artificial turf processing method using the two-shaft type shredder, it is difficult to perform accurate segregation into the pile and base fabrics and the sand by the shredding function of the shredder and the sieve function of the net-like conveyor. Thus the sand has adhered onto the shredded pieces of the pile and base fabrics discharged from the net-like conveyor, and it is therefore difficult to use the shredded pieces, as they are, as recycled material.

In addition, the shredder that shreds the artificial turf containing the sand has a problem in that the shredder is prone to break down with invasion, by the sand, of vicinity of bearings of the rotation shafts. The shredding blades on the rotation shafts, which quickly wear through agency of the sand and thus require frequent replacement of the blades, have a problem in that maintenance thereof requires much labor and a high cost. In the conventional artificial turf processing method using the two-shaft type shredder, such problems with the shredder that shreds artificial turf containing sand are not considered.

In the processing method also, the use of the comparatively large two-shaft type shredder necessitates a shredding station in a scale that is large to a certain degree and thus causes a problem in that the transportation of artificial turf from a site where the artificial turf is laid to the shredding station requires much labor and a high cost. The labor and cost for the transportation further increase on condition that the artificial turf contains rainwater.

It is an object of the invention to provide an artificial turf replacing method by which removed artificial turf can actually be recycled and used and by which labor and a cost for transportation of the removed artificial turf can be reduced and to provide an artificial turf processing apparatus adapted to the method. It is another object of the invention to provide an artificial turf processing apparatus by which accurate segregation into artificial turf bodies and filler can be attained and by which inconveniences caused by the filler can easily and effectively be resolved.

### SOLUTION TO THE PROBLEMS

In order to resolve the above problems, the present invention provides a method of replacing artificial turf having artificial turf bodies including base fabrics and pile fixed by fixation material to the base fabrics, and granular filler for filling therewith between the pile of the artificial turf bodies, the method comprising:
a removal step of removing the artificial turf from a laying surface,
a recovery step of recovering the filler from the artificial turf in vicinity of the laying surface of the artificial turf by a movable artificial turf processing apparatus,
a laying step of laying new artificial turf bodies on the laying surface, and
a filling step of filling the new artificial turf bodies with the filler between pile, the filler recovered in the recovery step.

According to the above configuration, the artificial turf having the artificial turf bodies filled with the filler is removed, and the filler is recovered from the artificial turf by the artificial turf processing apparatus in vicinity of the laying surface for the artificial turf. The new artificial turf bodies are laid on the laying surface from which the artificial turf has been removed, and is filled with the filler, which has been recovered in the recovery step, between the pile of the new artificial turf bodies. The filler is recovered from the artificial turf by the movable artificial turf processing apparatus in vicinity of the laying surface, and thus such labor and a cost for transporting artificial turf to a shredding station and/or a processing station as in the conventional methods can be reduced. On condition that artificial turf contains rainwater, in particular, increase in labor and cost for transportation of the artificial turf increased in weight by a water retaining function of the filler can be prevented, so that an efficiency and a cost for recycle processing of the artificial turf can effectively be improved. The recovery of the filler from the artificial turf in vicinity of the laying surface makes it possible to quickly obtain the filler for use in the new artificial turf and thus effectively reduces a term of the work of replacing the artificial turf. These functional effects are not obtained unless the artificial turf processing apparatus is movable, and there have never been movable artificial turf processing apparatuses.

Provided that the base fabrics and the pile among component members of the artificial turf bodies are thermoplastic resin such as polyethylene and polyester, the artificial turf bodies from which the filler has been recovered in the recovery step can effectively be used as recycled material. The fixation material may be either thermoplastic resin or non-thermoplastic resin.

In the artificial turf replacing method of an embodiment, filler reclaimed from waste artificial turf bodies is added to the filler for the filling in the filling step.

According to the embodiment, recycling use of material between artificial turf can be attained by use of the filler reclaimed from the waste artificial turf bodies and thus an inconvenience of conventional methods is prevented in which recycled materials segregated with much labor are wasted because of limited use thereof. On condition that the removed artificial turf contains non-thermoplastic resin, in particular, reuse of the filler having mixture of thermoplastic resin and non-thermoplastic resin can be attained without the conventional decomposition step requiring much labor. That is, recycling with little waste and high efficiency can be achieved with little labor, by the recycling use of component members between artificial turf. The reclaimed filler may be produced with use of shredded pieces of segregated artificial turf bodies as material.

In the artificial turf replacing method of an embodiment, the recovery step comprises:
a shredding step of shredding the artificial turf, and
a segregation step of segregating the shredded artificial turf into shredded pieces of the artificial turf bodies and the filler.

According to the embodiment, the shredded pieces of the artificial turf bodies and the filler can be segregated with high accuracy by application of the shredding step and the segregation step to the artificial turf.

In the artificial turf replacing method of an embodiment, the artificial turf replacing method further comprises
a removal step of removing filler, derived from waste tires, from the filler segregated in the segregation step.

Such problems as following have recently been pointed out with regard to filler derived from waste tires. That is, there are problems such as pollution of surroundings due to carbon black and transfer of color to athletes. There is another problem in that increase in temperature caused by heat absorption by the carbon black has adverse effects on athletes. Furthermore, there has been some concern about carcinogenicity of constituents contained in waste tires. According to the embodiment, mixture of the constituents of waste tires into the reclaimed filler that is reclaimed for new artificial turf can be prevented by the removal of the filler, derived from waste tires, from the filler segregated and recovered from existing artificial turf. Thus the problems described above, such as environmental pollution, can be resolved.

The present invention provides an artificial turf processing apparatus for processing removed artificial turf in vicinity of a laying surface for the artificial turf, for replacement of the artificial turf having artificial turf bodies including base fabrics and pile fixed by fixation material to the base fabrics, and granular filler with which the artificial turf bodies are filled between the pile, the apparatus comprising:
a pedestal having running gears,
a shredder for shredding the artificial turf, the shredder installed on the pedestal,
a segregator for segregating the artificial turf shredded by the shredder, into shredded pieces of the artificial turf bodies and the filler, the segregator installed on the pedestal, and
a drier for drying the filler segregated by the segregator, the drier installed on the pedestal.

According to the above configuration, the artificial turf processing apparatus includes the shredder, the segregator, and the drier on the pedestal having the running gears, and is thus capable of moving to vicinity of the laying surface and shredding, segregating, and drying artificial turf. Therefore, labor and a cost for transporting the artificial turf, removed from the laying surface, to a shredding station, a processing station and/or the like can be reduced. On condition that the artificial turf contains rainwater and increases in weight, in particular, the apparatus causes no substantial increase in the labor and cost for the transportation. As a result, efficient and economical processing can stably be done. As the running gears, there may be employed any type such as follower wheels that are not driven by a prime motor, wheels that are driven by a prime motor, and endless tracks that are driven by a prime motor. In short, a form of the running gears is not limited as long as the running gears allow movement of the pedestal on which the shredder and the like are installed. The pedestal is not limited to a single pedestal but there may be used a plurality of pedestals. The shredder, the segregator, and the drier may be installed, separately or in combination, on the plurality of pedestals.

In the artificial turf processing apparatus of an embodiment, the shredder is a one-shaft type shredder comprising:
a casing,
one rotation shaft that is placed in the casing and that has rotating edged tools fixed onto an outer circumferential surface thereof,
fixed edges that are fixed in the casing so as to face the rotation shaft, and
a screen which is placed on outer circumferential side of the rotation shaft and on which filter apertures with specified sizes are formed.

According to the embodiment, artificial turf is put into the casing of the shredder, and the artificial turf is shredded by being bitten by the rotating edged tools and the fixed edges with rotation of the rotation shaft. Once the artificial turf is shredded so that the shredded pieces of the artificial turf bodies have sizes smaller than those of the filter apertures of the screen, the shredded pieces pass through the filter apertures and are discharged. The shredder, which is of one-shaft type with the one rotation shaft, can be made lighter in weight than a two-shaft type shredder with two rotation shafts and can be driven by a small power source. Accordingly, the artificial turf processing apparatus can be made easy to move and can be decreased in energy consumption. The fixed edges are not required to be directly fixed to the casing but may be fixed to the casing through members for fixation.

The one-shaft type shredder is preferably placed so that the rotation shaft is parallel to a longitudinal direction of the pedestal. In this arrangement, artificial turf can be put into the shredder from a long side of the pedestal and thus a work of inputting the artificial turf, e.g., by a forklift or the like can easily be done.

In the artificial turf processing apparatus of an embodiment, the shredder has slant grooves, extending toward a center of axial directions of the rotation shaft with respect to a direction opposed to a direction of rotation of the rotation shaft, on outer circumferential surfaces of end parts of the rotation shaft.

According to the embodiment, the shredded pieces of the artificial turf bodies, the filler and the like that are positioned on the end parts of the rotation shaft move toward the center of the axial directions of the rotation shaft along the slant grooves with the rotation of the rotation shaft of the shredder. Thus inconveniences are prevented such as bite of the shredded pieces of the artificial turf bodies, the filler and the like between the end parts of the rotation shaft and components adjacent to the end parts, and invasion of the shredded pieces, the filler and the like into bearings positioned in vicinity of the end parts of the rotation shaft.

In the artificial turf processing apparatus of an embodiment, the segregator is a centrifugal-separation type segregator comprising:
a casing having an input port for the shredded artificial turf on one end part, and an outlet for the shredded pieces of the artificial turf bodies and an outlet for the filler, on the other end part,
a segregation chamber which is formed in the casing and in which a screen having filter apertures with specified sizes is provided on a portion of a wall surface thereof, and
rotation blades which are accommodate in the segregation chamber and which cause the shredded artificial turf to rotate while conveying the turf toward the other end side.

According to the embodiment, mixture of the shredded pieces of the artificial turf bodies and the filler is supplied to the segregator, and the rotation blades in the segregation chamber exert forces in centrifugal directions and in an axial direction on the shredded pieces and the filler. The filter apertures of the screen are formed so as to be smaller in size than the shredded pieces and larger in size than the filler, so that the filler having passed through the filter apertures of the screen is forwarded in radial directions by the centrifugal forces and is discharged from the outlet for the filler. The shredded pieces that cannot pass through the filter apertures of the screen are forwarded toward the other end side by the rotation blades and are discharged from the outlet for the shredded pieces. In this manner, the shredded pieces and the filler are efficiently segregated. On condition that the artificial turf contains rainwater, the shredded pieces and the filler can effectively be dried by air flow produced by the rotation blades in the segregation chamber.

In the artificial turf processing apparatus of an embodiment, the segregator is formed so as to heat at least the filler by heated air produced by a heat source common to the drier.

According to the embodiment, the filler can effectively be dried by the drier, with the filler preheated by the heating of at least the filler by the heated air supplied to the segregator. In addition, the shredded artificial turf can be dried with less energy consumption by the heat source doubling as that for the drier and that for the segregator. In the segregator, the heated air may be supplied into the segregation chamber so as to heat the shredded pieces of the artificial turf bodies and the filler. In this arrangement, the shredded pieces of the artificial turf bodies having the lower moisture content can be dried only by the segregator while the filler having the higher moisture content can be dried by the segregator and the drier, so that the drying operations can efficiently be performed according to water retention properties of the component materials of the artificial turf.

In the artificial turf processing apparatus of an embodiment, a moisture content of the filler dried by the drier is not more than 5 wt%.

According to the embodiment, by the control over the moisture content of the filler to 5 wt% or smaller, inconvenience of agglomeration of the filler can be prevented and new turf bodies can be filled with the filler with satisfactory workability. The moisture content refers to a ratio of a weight of water contained in the filler to a weight of the filler.

In the invention and embodiments described above, the filler for artificial turf that is to be newly laid is preferably composed of soft filler and hard filler. The soft filler is particles of thermoplastic elastomer formed on basis of thermoplastic material based on polyolefin, vinyl polymer or styrene or reclaimed material thereof. For instance, the thermoplastic elastomer is based on materials such as PE (polyethylene), PP (polypropylene), EVA (ethyl-vinyl-acetate), TPO (thermoplastic olefin), SBS (styrene-butadiene-styrene), SEES (styrene-ethylene-butadiene-styrene), and SEPS (styrene-ethylene-isoprene-styrene). The soft filler may be formed of thermoplastic resin such as polyolefin and vinyl polymer, other than thermoplastic elastomer. The soft filler may be formed of mixture material of thermoplastic elastomer and thermoplastic resin and/or may be mixed with particles of non-thermoplastic resin. The soft filler may include particles having cores of non-thermoplastic resin, vulcanized rubber, silica sand or the like coated with films of thermoplastic elastomer. As the hard filler, there may be used silica sand, shredded scraps of stones or the like, ceramic, crushed waste pottery, glass beads, granular waste glass, sewage sludge molten slag, rubbish molten slag, steel slag, shells and/or the like, which are not especially limiting; however, silica sand is preferable because that is inexpensive and readily available. The filler may be composed only of the soft filler or only of the hard filler.

### ADVANTAGEOUS EFFECTS OF THE INVENTION

According to the present invention, the artificial turf having the artificial turf bodies filled with the filler is removed, and the filler is recovered from the artificial turf by the artificial turf processing apparatus in vicinity of the laying surface for the artificial turf, and thus such labor and a cost for transporting artificial turf to a shredding station and/or a processing station as in the conventional methods can be reduced. On condition that artificial turf contains rainwater, in particular, increase in labor and cost for transportation of the artificial turf increased in weight by a water retaining function of the filler can be prevented, so that an efficiency and a cost for recycle processing of the artificial turf can effectively be improved.

### BRIEF DESCRIPTION OF THE DRAWINGS

Fig. 1 is a diagram showing new artificial turf that is a replacement in an artificial turf replacing method of the embodiment;
Fig. 2 is a flow chart showing the artificial turf replacing method;
Fig. 3A is a plan view of an artificial turf processing apparatus;
Fig. 3B is a side view of the artificial turf processing apparatus;
Fig. 4 is a process drawing schematically showing steps for processing artificial turf that are performed by the artificial turf processing apparatus;
Fig. 5A is a perspective view showing a rotation shaft of a shredder;
Fig. 5B is a schematic development of an outer circumferential surface of the rotation shaft;
Fig. 6A is a perspective view showing a rotating edged tool of the shredder;
Fig. 6B is a perspective view showing another configuration of the rotating edged tool;
Fig. 7 is a cross-section of a segregator;
Fig. 8A is a perspective view showing rotation blades;
Fig. 8B is a perspective view showing another configuration of the rotation blade;
Fig. 9 is a diagram showing main parts of a wind power separator; and
Fig. 10 is a diagram showing main parts of an air table.

### LEGEND FOR REFERENCE NUMERALS

- 1: artificial turf
- 2: base material
- 3: pile
- 4: fixation material
- 5: artificial turf body
- 6: granular filler
- 10: pedestal
- 11: shredder
- 12: segregator
- 13: drier

### DETAILED DESCRIPTION OF THE PREFERED EMBODIMENTS

Hereinbelow, embodiments of the invention will be described with reference to the accompanying drawings.

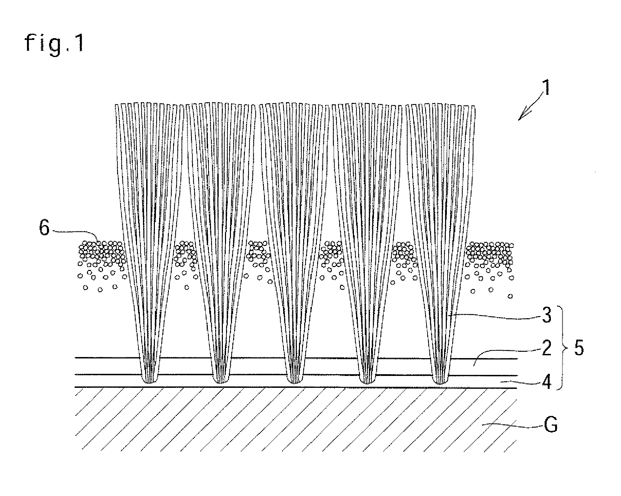

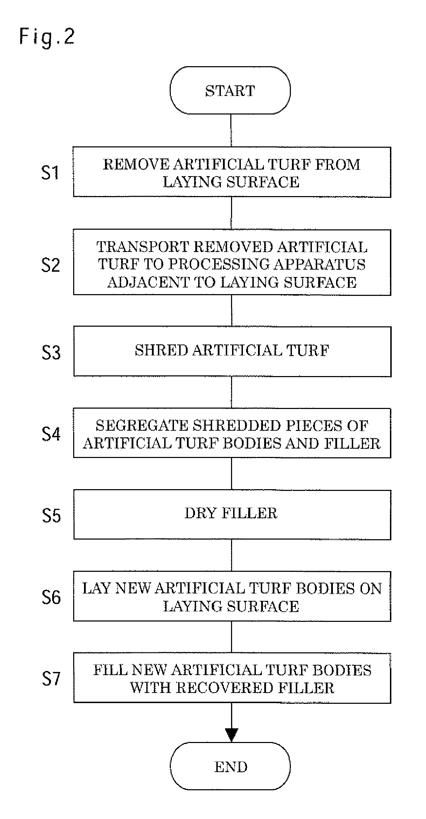

Fig. 1 is a diagram showing new artificial turf that is a replacement in an artificial turf replacing method of the embodiment, and Fig. 2 is a flow chart showing the artificial turf replacing method.

As shown in Fig. 1, the artificial turf 1 is composed chiefly of artificial turf bodies 5 having sheet-like base material 2, pile 3 planted in the base material 2, and fixation material 4 for fixing the base material 2 to the pile 3, and of granular filler 6 for filling between the pile 3 of the artificial turf bodies.

The base material 2 is formed of a plain weave fabric composed of fibers of thermoplastic resin such as polypropylene and polyester. The base material 2 may be formed of a nonwoven fabric coated with SBR (styrene-butadiene rubber), polyurethane latex and/or the like. In the plain weave fabric, natural fibers, metal fibers and/or the like may be woven into the resin fibers.

The pile 3 is formed of fibers of thermoplastic resin such as polyethylene and polypropylene, and tufted bodies composed of bunches of a plurality of the fibers are sewn on the base material 2 at specified intervals. The pile 3 may be formed of other thermoplastic resin such as nylon and polyester, and may employ various forms such as monofilament and split yarn. Though the pile 3 is generally shaped like straight lines, extremity portions thereof may be curled. A length of the pile 3 from a surface of the base material 2 is designed within a range from 10 to 80 mm, according to a purpose of a stadium where the artificial turf is provided.

A back surface of the base material 2 is coated with the non-thermoplastic fixation material 4, composed of SBR or the like, for instance, which fixes the pile 3 sewn on the base material 2 and brings the artificial turf bodies 5 into intimate contact with the laying surface.

The filler 6 is formed of soft filler and hard filler. Preferably, the soft filler is particles formed of thermoplastic elastomer. The thermoplastic elastomer refers to macromolecular material that has properties, at normal temperature, similar to those of bridged rubber and that can be formed, with plasticization, in a manner similar to that for plastic at high temperatures. Though the thermoplastic elastomer is preferably based on polyolefin, for instance, there may be used other thermoplastic elastomer such as that based on vinyl chloride or urethane. The soft filler may be formed of thermoplastic resin and there may be used polyolefin such as polyethylene and polypropylene or vinyl polymer such as EVA (ethyl-vinyl-acetate), for instance. Alternatively, the soft filler may be formed by mixture of thermoplastic elastomer and thermoplastic resin. The soft filler may be particles having cores of non-thermoplastic resin, vulcanized rubber, silica sand or the like coated with films of thermoplastic elastomer. The soft filler particles have diameters of 0.2 to 4.0 mm, chiefly, and absolute specific gravities of 1.4 to 1.7 g/cm³. This configuration makes the filler resist being flowed out in rain and attain a rebound property, a holding property and the like that are suitable for sports. By flexibility of the soft filler and rolling action of the particles, graze of an athlete that may be caused by tumble, sliding or the like can be restricted to a slight degree.

Preferably, the hard filler is silica sand. As the hard filler, there may be used crush scraps of stones or the like, ceramic, crushed waste pottery, glass beads, granular waste glass, sewage sludge molten slag, rubbish molten slag, steel slag, glass beads and/or the like. The hard filler particles have diameters of 0.2 to 1.2 mm, chiefly, and absolute specific gravities of 1.5 to 3.0 g/cm³. This configuration makes the filler resist being flowed out in rain and leads to stable intimate contact of the artificial turf bodies 5 with the laying surface through agency of a dead weight of the hard filler.

As the filler 6, filler of existing artificial turf may be reused or the existing filler having addition of new filler may be used. Preferably, soft filler in the new filler is reclaimed filler that has been reclaimed and produced from artificial turf bodies of other artificial turf.

The artificial turf 1 is preferably filled with 15 kg/m² of the hard filler and 12 kg/m² of the soft filler. The filling quantities of the filler may appropriately be altered according to the length of the pile or the like. For instance, the filling quantity of the hard filler can be adjusted within a range of 10 to 25 kg/m², and the filling quantity of the soft filler can be adjusted within a range of about 7 to 20 kg/m².

The artificial turf 1 is laid on a surface of a ground G formed by laying of crushed stones, scattering of bituminous material or the like. That is, the surface of the ground G makes the laying surface for the artificial turf. The artificial turf 1 can be applied to various athletic facilities for soccer, tennis, baseball, rugby, American football and/or the like, and specifications of the pile and the filler are appropriately altered according to purposes of the athletic facilities.

A method of replacing existing artificial turf with the artificial turf 1 described above is carried out in accordance with the flow chart shown in Fig. 2. The existing artificial turf is preferably similar to the artificial turf 1 shown in Fig. 1, but has only to have at least turf bodies, in which thermoplastic resin is used as main material thereof, and granular filler. For the embodiment, there will be described replacement of existing artificial turf composed of pile formed of polypropylene or polyethylene, base fabrics formed of polyester, fixation material formed of SBR, soft filler formed of thermoplastic elastomer based on polyolefin and thermoplastic elastomer based on vinyl polymer, and hard filler formed of silica sand.

Initially, the existing artificial turf is removed from the laying surface (step S1). In detail, the artificial turf is cut at specified intervals into beltlike pieces, which are then wound into pile-like bodies. The pile-like artificial turf is transported to an artificial turf processing apparatus placed adjacent to the laying surface for the artificial turf (step S2). The transportation to the artificial turf processing apparatus is performed by a forklift, for instance. The artificial turf processing apparatus, composed of various units of processing equipment installed on a pedestal on a large truck, can be moved to vicinity of the laying surface for the artificial turf. Thus a distance from the laying surface to the artificial turf processing apparatus is so short that the artificial turf can easily be transported by the forklift or the like.

The artificial turf processing apparatus is composed of a shredder for shredding artificial turf, a segregator for performing segregation into shredded pieces of the artificial turf bodies and into filler, and a drier for drying the segregated filler, which are installed on the pedestal on the truck. A structure of the artificial turf processing apparatus will be described later in detail.

In the artificial turf processing apparatus, initially, the artificial turf is shredded by the shredder, so that mixture shreds of the shredded pieces of the artificial turf bodies and the filler are obtained (step S3). Preferably, the shredder is a one-shaft type shredder having one rotation shaft provided with rotating edged tools, in terms of size reduction. Subsequently, the shreds are segregated by the segregator into the shredded pieces of the artificial turf bodies and the filler (step S4). Preferably, the segregator is a centrifugal segregator because the shredded pieces and the filler can be dried therein. The shredded pieces segregated by the segregator are discharged from the artificial turf processing apparatus. The segregated shredded pieces are recycled into material of soft filler for artificial turf. The segregated filler is dried by the drier (step S5) so as to have a moisture content not larger than a specified value. Specifically, the moisture content is preferably not more than 5 wt%. Provided that the moisture content of the filler is not more than 5 wt%, inconvenience of agglomeration of the filler can be prevented and new turf bodies can be filed with the filler with satisfactory workability. On condition that the moisture content of the filler is not less than 10 wt%, the agglomeration of the filler makes it difficult to perform filling work for the turf bodies. In order to facilitate the filling work, the moisture content of the filler is required to be less than 10 wt%, and is preferably not more than 5 wt%. It was observed, in an experiment, that a silica sand content, as the hard filler, of the filler of 55.6 wt% and the moisture content of the whole filler not more than 5 wt% made it possible to perform the filling work with satisfactory workability without agglomeration of silica sand. It was also observed that the filler including only the hard filler of silica sand was required to have the moisture content not more than 1 wt% in order to ensure a certain workability in the filling work. On condition that the silica sand content, as the hard filler, of the filler is 80 wt%, the moisture content not more than 2 wt% prevents the agglomeration of the hard filler. On condition that the silica sand content as the hard filler is 60 wt%, the moisture content not more than 4 wt% prevents the agglomeration of the hard filler. The above facts indicate that the moisture content of the filler not more than 5 wt% makes it possible to perform the filling work with satisfactory workability provided that silica sand having common particle diameters is used as the hard filler with a common composition. Preferably, the drier is a band-type drier having a plurality of stages of conveyors for sequentially conveying the filler in a casing that is supplied with heated air. On the other hand, the new artificial turf bodies 1 are laid on the laying surface from which the artificial turf has been removed (step S6), and are filled with the filler dried by the drier of the artificial turf processing apparatus, between the pile of the new artificial turf bodies (step S7). When there is a shortage of the filler, new filler is added.

In such an artificial turf replacing method, the filler can be segregated and recovered from the artificial turf in vicinity of the laying surface, and there is no need to transport the artificial turf to a specified processing station in contrast to the conventional processing. Accordingly, labor and a cost for the transportation can be reduced in comparison with the conventional processing. When the artificial turf that contains rainwater is increased in weight by the water retaining function of the filler, in particular, such increase in the labor and cost for the transportation as occurs in the conventional processing can effectively be prevented because the artificial turf has only to be transported to the artificial turf processing apparatus that is placed adjacent to, i.e., at a significantly short distance from, the laying surface. The recovery of the filler from the existing artificial turf in vicinity of the laying surface makes it possible to quickly obtain the filler for use in new artificial turf and thus effectively reduces a term of the work of replacing the artificial turf.

The artificial turf bodies shredded and segregated by the artificial turf processing apparatus can be recycled into material of the soft filler for new artificial turf. That is, the shredded pieces of the artificial turf bodies containing polypropylene or polyethylene, polyester and SBR which materials are in a mixed state, with addition of thermoplastic material based on polyolefin, vinyl polymer or the like, inorganic filler, plasticizer, and pigment, are molten, mulled, formed, and subsequently shredded so that the soft filler having specified particle diameters is produced. The inorganic filler is added for adjustment of the absolute specific gravity for purposes of prevention of fluidization that may be caused by rainwater, rising in the air and the like, and there may be used the inorganic filler containing calcium carbonate, aluminium silicate, kaolin clay and/or the like, for instance. In order to increase flexibility of the soft filler, softening agent may be added thereto. As the softening agent, there may be used the agent containing linseed oil, paraffin-based process oil, naphthene-based process oil, aromatic process oil, and/or the like. There may be added vulcanized rubber particles in order to adjust elasticity. As the pigment, pigment colored green, beige, brown or the like is preferably used in order to reduce heat absorption and to suppress temperature increase on the artificial turf. The various materials can be molten and mixed with use of a Banbury mixer, a pressurizing kneader or the like, for instance. After the melting and mixture, the shreds are pulverized by a pulverizer into chips, and are reclaimed as soft filler. The reclamation as the soft filler may be achieved by melting, mixture and extrusion molding using a two-shaft type extruder, and by subsequent pulverization.

Thus recycling use of material between artificial turf can be attained by the production of the soft filler from the waste artificial turf bodies and the use thereof as the reclaimed filler for artificial turf. This eliminates a drawback of conventional methods in which recycled materials segregated with much labor are wasted because of limited use thereof. In particular, the soft filler can be produced in a state in which the fixation material such as SBR of non-thermoplastic resin is mixed with thermoplastic resin, without decomposition processing of the fixation material. As a result, recycling without waste can be achieved with little labor.

When new filler is added in the embodiment, the reclaimed filler produced from waste artificial turf bodies is preferably used therefor.

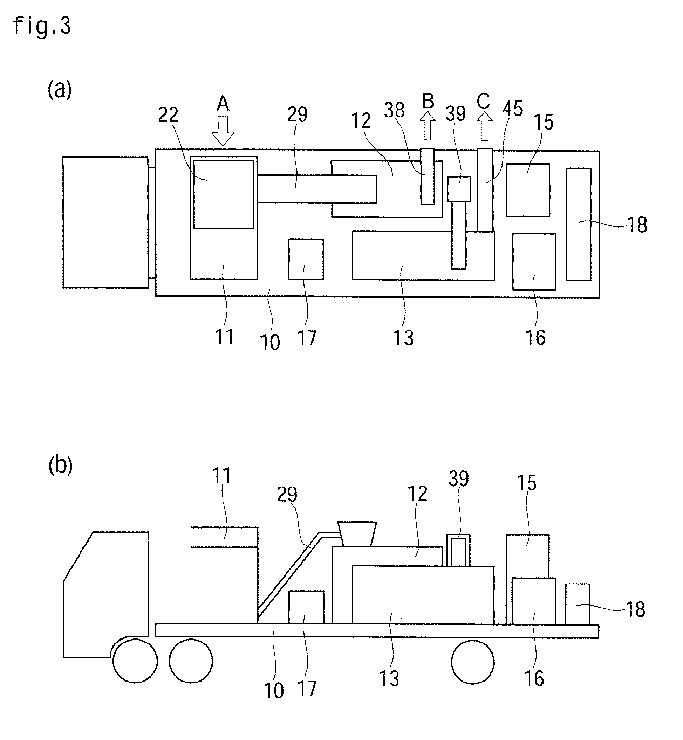

Figs. 3A and 3B are diagrams showing the artificial turf processing apparatus that is used in the artificial turf replacing method of the embodiment. Fig. 3A is a plan view of the artificial turf processing apparatus, and Fig. 3B is a side view of the artificial turf processing apparatus.

As shown in Figs. 3A and 3B, the artificial turf processing apparatus is composed of a shredder 11, a segregator 12, and a drier 13 that perform direct processing of artificial turf and that are installed on a pedestal 10 on a large truck. On the pedestal 10 are further installed a dust collector 15 for recovering dust from exhaust gas of the drier 13, a hydraulic unit 16 for the shredder 11, an electric heater 17 as a heat source, and a control panel 18.

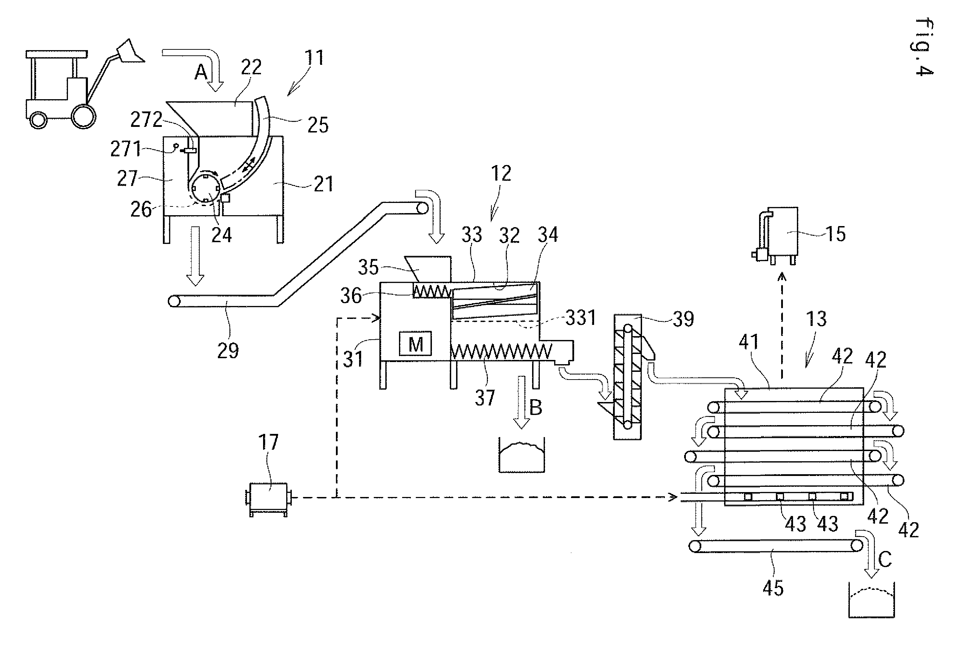

Fig. 4 is a process drawing schematically showing steps for processing artificial turf that are performed by the artificial turf processing apparatus.

The shredder 11 is placed on front part of the pedestal 10 and at back of a driver's cab of the truck, and has a casing 21 having an input port 22 for artificial turf in upper part thereof, one rotation shaft 24 that is placed in the casing 21, a pusher 25 that is reciprocated relative to the rotation shaft 24, a screen 26 that is placed so as to cover a portion of outer circumference of the rotation shaft 24, and an oscillation unit 27 that supports the screen 26 and that is mounted in the casing 21 so as to be capable of oscillating.

The input port 22 is shaped like a funnel widened toward an upper end thereof, and an edge of an upper end opening thereof extends toward an edge of a long side of the pedestal 10. Thus artificial turf can be put into the input port 22 by a forklift or the like from the long side of the pedestal 10 as shown by an arrow A in Figs. 3. Hereinbelow, a face of the casing 21 that is close to the long side of the pedestal 10 and that the forklift or the like approaches for the input of artificial turf will be referred to as a front face.

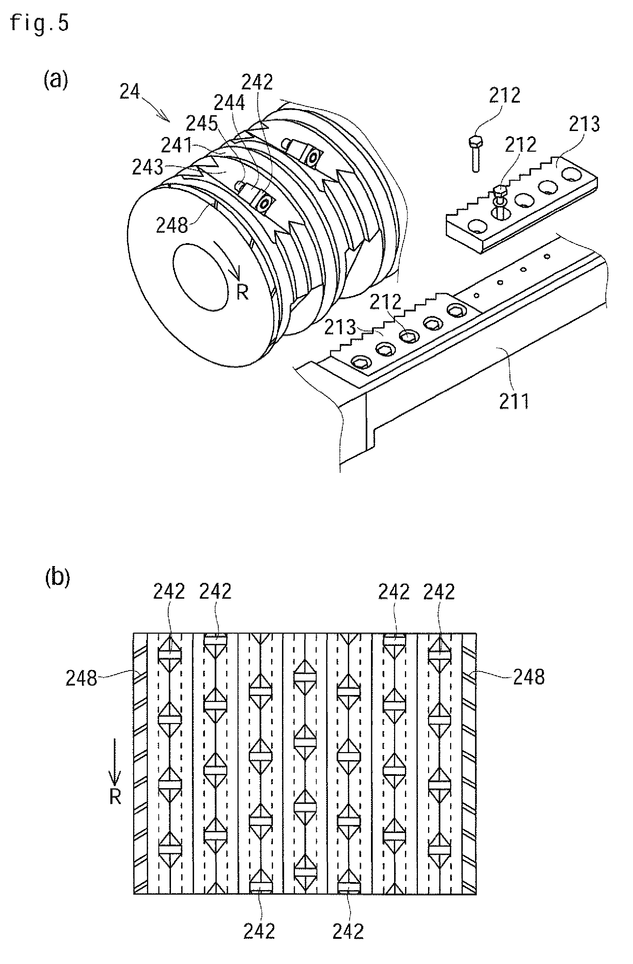

As shown in Fig. 5A, the rotation shaft 24 has a shaft body 241 on which a plurality of V-shaped grooves circumferentially extending and adjoining in an axial direction are formed, and a plurality of rotating edged tools 242 which are detachably provided on an outer circumferential surface of the shaft body 241. On the outer circumferential surface of the shaft body 241, recesses 243 each having a shape resulting from cutout of an arcuate portion of a ridge between adjoining V-shaped grooves are provided, and the rotating edged tools 242 are each fixed by a bolt 245 to a fixation member 244 welded to bottom of each recess 243. The rotating edged tool 242 is mounted on each ridge and is formed so as to mesh with a fixed edge 213 on a side of the casing 21 with rotation of the rotation shaft 24. A plurality of fixed edges 213, 213, ... are arranged adjacent to the outer circumferential surface of the rotation shaft 24 and in parallel with an axis of the rotation shaft 24 and are fixed by bolts 212, 212, ... onto a fixed-edge platform 211 on the side of the casing 21, so as to form a straight line.

Fig. 5B is a development schematically showing the developed outer circumferential surface of the rotation shaft 24. As shown in Fig. 5B, the plurality of rotating edged tools 242 are circumferentially offset with respect to each other. Thus the plurality of rotating edged tools 242 mesh with the fixed edges 213 with different timing, so that rapid increase in torque load on a driving motor is prevented which increase might be caused by simultaneous bite between the plurality of rotating edged tools 242 and the fixed edges 213.

On both axial end parts of the rotation shaft 24 are provided a plurality of slant grooves 248 for preventing clogging with the filler or the like. The slant grooves 248 extend toward a center of axial directions of the rotation shaft 24 with respect to a direction opposed to a direction R of rotation of the rotation shaft 24. With the rotation of the rotation shaft 24 in the direction R in Fig. 5A, shredded pieces of artificial turf bodies, filler and the like move toward the center of the axial directions along the slant grooves 248. Thus inconveniences are prevented such as bite of the shredded pieces of artificial turf bodies, the filler and the like between the end parts of the rotation shaft 24 and components adjacent to the end parts, and invasion of the shredded pieces, the filler and the like into bearings located in vicinity of the end parts of the rotation shaft 24.

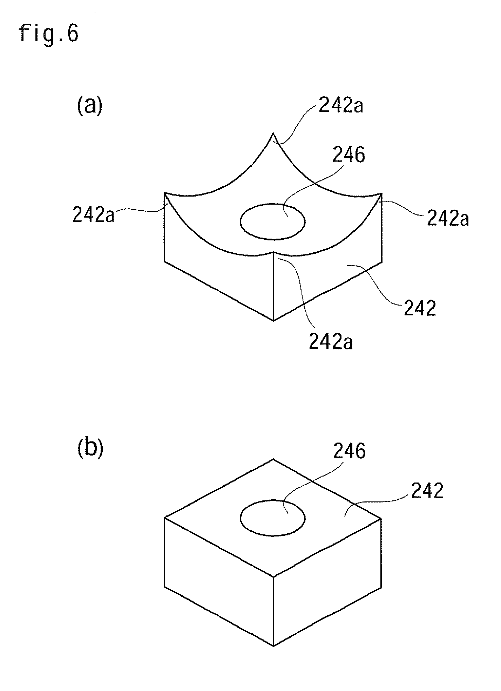

As shown in Fig. 6A, the rotating edged tools 242 are each shaped like a flattened hexahedron and each have pointed corner parts 242a formed at four corners of a square face thereof and protruding relative to center part thereof. The rotating edged tools 242 are each fixed onto the rotation shaft 24 so that the square face on which the pointed corner parts 242a are formed faces in a direction of a tangent to the rotation shaft 24, and so that one of the pointed corner parts 242a protrudes toward an outside diameter of the shaft. At center of the square face of each rotating edged tool 242 is formed a bolt hole 246 into which the bolt 245 is to be inserted. As shown in Fig. 6B, the rotating edged tools 242 may each be shaped like a flattened hexahedron having no pointed corner parts 242a.

The rotation shaft 24 has a diameter of 300 to 500 mm and is rotated with a number of revolutions of 100 to 200 rpm, for instance, by a motor not shown through a transmission mechanism and a speed reducer. The rotation shaft 24 is preferably rotated so that a peripheral velocity of the rotating edged tools 242 of the rotation shaft 24 on a circle made by a tip of the tools is within a range from 2.2 to 3.5 m/sec.

The pusher 25, in shape of a curved plate having an arc-shaped section, is placed on rear side of the rotation shaft 24, and is configured so as to be reciprocated relative to the rotation shaft 24 by a hydraulic cylinder not shown. When artificial turf is inputted and the rotation shaft 24 is rotated, the pusher 25 is driven toward the rotation shaft 24 so that an end face thereof pushes the artificial turf against the rotation shaft 24. Thus the artificial turf is effectively bitten, without escape, between the rotating edged tools 242 of the rotation shaft 24 and the fixed edges 213 on the side of the casing 21. A trace of the reciprocation of the pusher 25 is in shape of an arc having the same center and radius as the arc-shaped section of the pusher 25. When the pusher 25 is driven in a direction such that the pusher 25 gets away from the rotation shaft 24, an end part of the pusher 25 opposite to the rotation shaft 24 moves upward and the pusher 25 is positioned on rear face side of the input port 22. Thus the shredder 11 is decreased in size in a longitudinal direction thereof (a direction of width of the pedestal 10).

The screen 26 is generally shaped like a semicylinder and is placed so as to cover a front face portion of the rotation shaft 24, that is, the portion opposite to the pusher 25 with respect to the rotation shaft 24. A plurality of filter apertures having diameters of 30 to 50 mm are formed on the screen 26 and, with the rotation of the rotation shaft 24, the shredded pieces having sizes that allow passage thereof through the filter apertures pass through the screen 26 and are received by a conveyor 29 below.

The oscillation unit 27 fitted with the screen 26 is installed in front face side part of the casing 21 and can be oscillated, by a hydraulic cylinder 272, around an oscillation shaft 271 provided in upper part of the unit. When the shredder 11 is activated and the oscillation unit 27 is closed, the screen 26 is locked in a state in which the screen 26 surrounds the rotation shaft 24. When the shredder 11 is activated and the oscillation unit 27 is opened, on the other hand, it is made possible to perform maintenance of the screen 26, the rotation shaft 24, the rotating edged tools 242, the fixed edges 213 and the like. On a lower end of the oscillation unit 27 is provided an opening, through which the shreds can be discharged toward the conveyor 29 below.

Upon the activation of the shredder 11, the rotation of the rotation shaft 24 makes the rotating edged tools 242 and the fixed edges 213 mesh with each other, and the artificial turf bodies are shredded by a shearing function of the rotating edged tools 242 and the fixed edges 213. The artificial turf bodies are shredded so as to have sizes that allow passage thereof through the filter apertures of the screen 26, so that the shredded pieces of the artificial turf bodies along with the filler pass through the screen 26 and are discharged from the lower end of the oscillation unit 27. The artificial turf is pushed by the pusher 25 against the rotation shaft 24 and thus is efficiently shredded by being effectively bitten between the rotating edged tools 242 and the fixed edges 213.

The artificial turf contains the hard filler such as silica sand and thus tends to promote wear in the rotating edged tools 242 and the fixed edges 213. The rotating edged tools 242, which are detachably fixed by the bolts 245 onto the rotation shaft 24, and the fixed edges 213, which are detachably fixed by the bolts 212 onto the fixed edge platform 211, can appropriately be replaced according to degrees of the wear therein. Thus replacement of the rotating edged tools 242 and the fixed edges 213 that are little worn can be minimized. Furthermore, changes in angles at which the rotating edged tools 242 are mounted on the fixation members 244 make it possible to use one rotating edged tool 242 for a long term though the wear is prone to progress. That is, the pointed corner part 242a protruding in the direction of the outside diameter of the rotation shaft 24 is sequentially changed from one to another by the change in the mounting angle of the rotating edged tool 242 around the bolt hole 246, so that the one rotating edged tool 242 can be mounted at four different mounting angles. Therefore, the one rotating edged tool 242 can be used until the four pointed corner parts 242a are worn out, and cost is thereby reduced. The plurality of fixed edges 213 can be replaced, without waste, according to degrees of the wear therein. Works of replacing the rotating edged tools 242 and the fixed edges 213 can be done with easy access from the long sides of the pedestal 10 with the oscillation unit 27 on the front face side of the casing 21 opened. The slant grooves 248 on both the end parts of the rotation shaft 24 prevent the inconveniences such as the bite of the shredded pieces, the filler and the like with the end parts of the rotation shaft 24 and the invasion of the shredded pieces, the filler and the like into the bearings of the rotation shaft 24. Thus the shredder 11 of the embodiment effectively resolves the problems with the shredding of the artificial turf containing the filler.

The shredder 11 of the embodiment can be reduced in weight because the shredder is of one-shaft type with the one rotation shaft 24, and can be reduced in size because the pusher 25 reciprocates along the arc-shaped trace. Accordingly, the size, weight and the like of the artificial turf processing apparatus can be made to comply with limitations related to driving on public roads while a shredding performance of the shredder 11 is ensured.

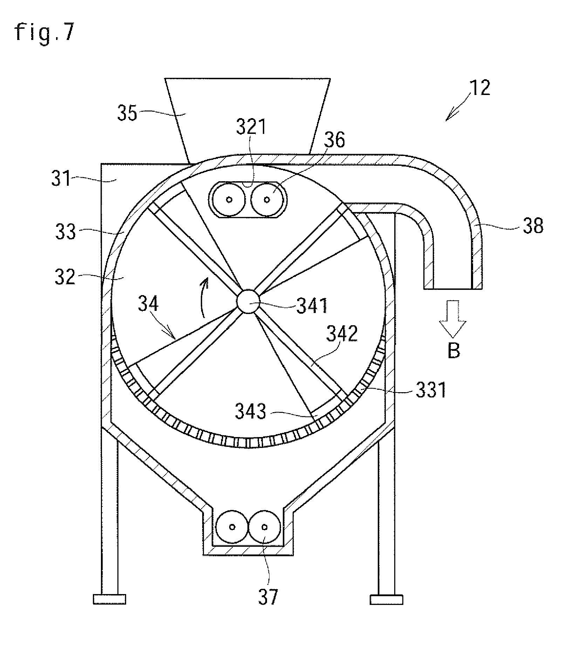

Fig. 7 is a cross-section of the segregator 12, taken in a position where an outlet 38 is provided. As shown in Figs. 4 and 7, the segregator 12 has a power casing 31 in which a motor is accommodated, a segregation casing 33 which is connected to the power casing 31 and inside which a segregation chamber 32 is formed, rotation blades 34 placed in the segregation chamber 32 of the segregation casing 33, an input port 35 provided on a top face of the power casing 31, an input screw conveyor 36 for delivering shredded pieces and filler, inputted from the input port 35, to the segregation chamber 32, a discharge screw conveyor 37 for discharging the filler segregated in the segregation chamber 32, and the outlet 38 for discharging the shredded pieces segregated in the segregation chamber 32.

The power casing 31 has a generally rectangular shape, and contains the motor for driving the rotation blades 34, the input screw conveyor 36, and the discharge screw conveyor 37. The input port 35 accommodates a terminal end part of the conveyor 29 extending from the shredder 11, so that the shredded pieces of the artificial turf bodies and the filler shredded in the shredder 11 are put into the input port 35. The input screw conveyor 36 is accommodated in upper part of the power casing 31. One end of the conveyor 36 communicates with a lower end of the input port 35, and an extremity of the conveyor communicates with the segregation chamber 32 of the segregation casing 33.

The segregation casing 33 has upper part shaped like a semicylinder with a semicircular section and lower part shaped like a semi-polygonal prism with a polygonal section. Inside the lower part of the segregation casing 33 is accommodated a screen 331 shaped like a semicylinder with a semicircular section. A plurality of filter apertures having diameters of 3 to 5 mm are formed on the screen 331 so as not to allow passage therethrough of the shredded pieces of the artificial turf and so as to allow passage therethrough of the filler. The upper part of the segregation casing 33 and the screen 331 define the segregation chamber 32, which is generally cylindrical, inside those. At a lower end of the lower part of the segregation casing 33 is provided the discharge screw conveyor 37 extending in a longitudinal direction of the segregation casing 33. The discharge screw conveyor 37 is supplied with heated air prepared by the electric heater 17. Downstream side of the discharge screw conveyor 37 protrudes from an end face on a side of the segregation casing 33 opposite to the power casing 31 (which will be referred to as terminal side, hereinbelow) and is connected to a bucket conveyor 39 for supplying the filler for the drier that will be described later.

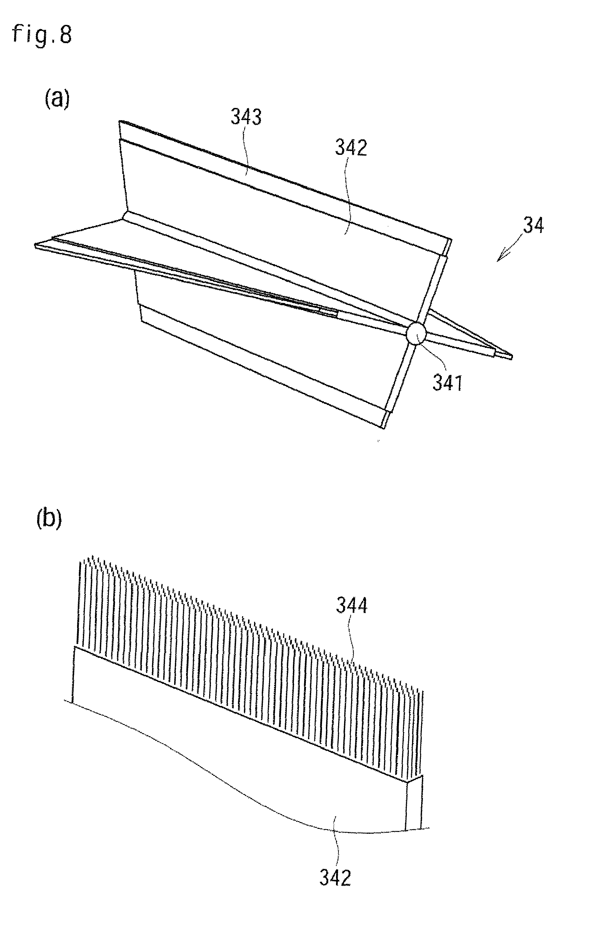

As shown in Fig. 8A, the rotation blades 34 have four blade bodies 342 that are fixed around a center shaft 341 so as to have a cross-shaped section, and rubber blades 343 that are fixed along outer edges of the blade bodies 342. The blade bodies 342 and the rubber blades 343 are mounted so as to be circumferentially twisted with respect to a direction of an axis of the center shaft 341. The rotation blades 34 are formed so that outer edges of the rubber blades 343 are in contact with inside surfaces of the segregation chamber 32, that is, an inside surface of the upper part of the segregation casing 33 and an inside surface of the screen 331. In place of the rubber blades 343 may be provided resin blades having flexibility. In place of the rubber blades 343, alternatively, metal brushes 344 may be provided by planting of metal wires, which extend radially, on the outer edges of the blade bodies 342, as shown in Fig. 8B. Otherwise, resin brushes may be provided by planting of resin fibers thereon. On the blade bodies 342 may be formed a plurality of air vents. When the blade bodies 342 and the rubber blades 343 that are mounted with the twist with respect to the center shaft 341 are rotated about the center shaft 341, swirl air flow in centrifugal and axial directions is produced in the segregation chamber 32. The rotation blades 34 have a diameter of 800 to 1200 mm and are rotated with a number of revolutions of 600 to 1200 rpm. Preferably, the diameter of the rotation blades 34 is 1000 mm and the number of revolutions is 1600 rpm. The rotation blades 34 are preferably rotated so that a peripheral velocity of radial extremities of the rotation blades 34 is within a range from 35 to 55 m/sec.

As shown in Fig. 7, an opening 321 in connection with the extremity of the input screw conveyor 36 is provided on upper part of an end face of the segregation chamber 32 on the side of the power casing 31. The outlet 38 is provided on terminal end part of the segregation casing 33. The outlet 38 is formed so as to branch from upper end part of the segregation casing 33 in a direction of a tangent to the inner circumferential surface of the segregation chamber 32, then curves gently downward, and has an opening for discharging the shredded pieces, on an extremity thereof.

Upon the activation of the segregator 12, the shredded pieces of the artificial turf bodies and the filler that are put into the input port 35 are supplied into the segregation chamber 32 through the input screw conveyor 36. With the rotation of the rotation blades 34, the shredded pieces and the filler supplied into the segregation chamber 32 move toward the terminal side in the segregation chamber 32 while receiving forces in the centrifugal directions. Receiving the forces in the centrifugal directions, the filler with sizes smaller than those of the filter apertures of the screen 331 then passes through the screen 331 and moves to the lower part of the segregation casing 33. The filler having moved to the lower part of the casing 33 is discharged from the casing 33 through the discharge screw conveyor 37 provided at the lower end of the lower part of the casing 33, and is guided to the drier 13. While the filler is moved to the drier by the discharge screw conveyor 37, the filler is heated by heated air supplied from the electric heater 17. On the other hand, the shredded pieces with sizes larger than those of the filter apertures of the screen 331 moves to the terminal end of the segregation chamber 32, and is then discharged from the outlet 38 as shown by an arrow B.

Thus the shredded pieces of the artificial turf bodies and the filler can be segregated with high accuracy by the segregator 12 of the embodiment. The moisture contents contained in the shredded pieces and the filler can effectively be reduced by air flow produced by the rotation blades 34. By the supply of heated air to the discharge screw conveyor 37, the filler containing rainwater can be preheated before being fed to a drying process in the drier 13, so that the filler can effectively be dried.

The filler segregated by the segregator 12 is conveyed to the drier 13 by the bucket conveyor 39. As shown in Fig. 4, the drier 13 is a band-type drier having a plurality of stages of belt conveyors 42, 42, ... for conveying the filler in horizontal directions, which conveyors are arranged in a vertical direction, in a drying oven 41 supplied with heated air. Belts of the belt conveyors 42 are formed of metal meshes so as to allow passage therethrough of the heated air blowing from nozzles 43, provided below, into the drying oven 41. On condition that the filler contains the soft filler based on polyolefin, vinyl polymer or the like, a heating temperature in the drying oven 41 is controlled so as to be in a range from 80 to 150°C. On condition that the filler contains only hard filler such as silica sand, the temperature in the drying oven 41 is controlled so as to be in a range from 100 to 200°C. The filler dropped through the bucket conveyor 39 onto the topmost belt conveyor 42 is dried while being sequentially conveyed to the lower belt conveyors 42, so that the moisture content of the filler just discharged from the drier 13 is not more than 5 wt%. As shown by an arrow C, the filler dried by the drier 13 is discharged by a discharge conveyor 45 from a long side of the pedestal 10 to outside of the artificial turf processing apparatus. The discharged filler is collected in recovery bugs or the like, and artificial turf bodies provided anew on the laying surface adjacent to the artificial turf processing apparatus are filled with the filler. By the adjustment of the moisture content of the filler to 5 wt% or smaller value, the agglomeration of the filler can be prevented and thus the work of filling the new turf bodies with the filler can be done with satisfactory workability.

The dust collector 15 has a fan for sucking air to be filtered and filter medium for filtering the sucked air and collecting dust. The dust collector 15 is connected to the drier 13 and is formed so as to filter the air having dried the filler in the drying oven 41 and collect particulates of the filler from the air. The dust collector 15 is preferably equipped with a pulse jet cleaner that applies shock waves of high pressure air to the filter medium, a vibrating cleaner that applies vibrations to the filter medium, or the like, for removing dust accumulated on the filter medium. The dust collector 15 may suck air in the segregator 12 and/or the bucket conveyor 39 in order to collect particulates of the shredded pieces and/or the filler.

The electric heater 17 has a heating unit for heating air by induction heating, resistance heating or the like and a fan for blowing out the air heated by the heating unit, and supplies the heated air having a specified temperature to the discharge screw conveyor 37 of the segregator 12, the nozzles 43 of the drier 13, and/or the like. By the supply of the heated air from the single electric heater 17 as a heat source to the segregator 12 and the drier 13, the filler having a high moisture content can efficiently be dried. The heated air from the electric heater 17 may be supplied into the segregation chamber 32 of the segregator 12 so as to heat the shredded pieces of the artificial turf bodies and the filler. In this arrangement, the shredded pieces of the artificial turf bodies having a low moisture content can be dried only by the segregator 12 while the filler having the high moisture content can be dried by the segregator 12 and the drier 13, so that the drying operations can efficiently be performed according to water retention properties of component materials of the artificial turf.

With use of the artificial turf processing apparatus of the embodiment, as described above, artificial turf removed from a laying surface can be shredded and segregated into shredded pieces of artificial turf bodies and filler, in vicinity of the laying surface. Therefore, the filler can quickly be taken out from the existing artificial turf and a work of laying new artificial turf can quickly be done. In addition, there is no need to transport the artificial turf to a shredding station, a processing station and/or the like in order to extract the filler, and thus labor and a cost for the transportation can effectively be reduced. Even if artificial turf to be replaced contains rainwater, in particular, the labor and cost for the transportation of the artificial turf increased in weight by the rainwater can effectively be reduced because the filler can be segregated if only the artificial turf is transported by a forklift or the like to the artificial turf processing apparatus adjacent to the laying surface. Furthermore, the filler can be dried in vicinity of the laying surface to such a degree that a work of filling for new artificial turf is facilitated, and thus a work of laying the new artificial turf can quickly and easily be done. In addition, the obtainment of the shredded pieces of the artificial turf bodies in vicinity of the laying surface makes it possible to transport the shredded pieces directly from the vicinity of the laying surface to a reclamation processing factory, and thus quick production of and cost reduction for reclaimed filler can be attained.

There has been described above the embodiment in which the filler in the removed artificial turf contains the soft filler formed of polyolefin and vinyl polymer and the hard filler formed of silica sand. On condition that the filler in the removed artificial turf contains soft filler derived from waste tires, it is necessary to remove the soft filler from the filler. Reasons for that are as follows. That is, the soft filler being black rubber chips obtained from recycling of waste tires causes problems such as pollution of surroundings due to carbon black and transfer of color to athletes. There is another problem in that increase in temperature caused by heat absorption by the carbon black has adverse effects on athletes. Furthermore, there has been some concern about carcinogenicity of constituents contained in waste tires.

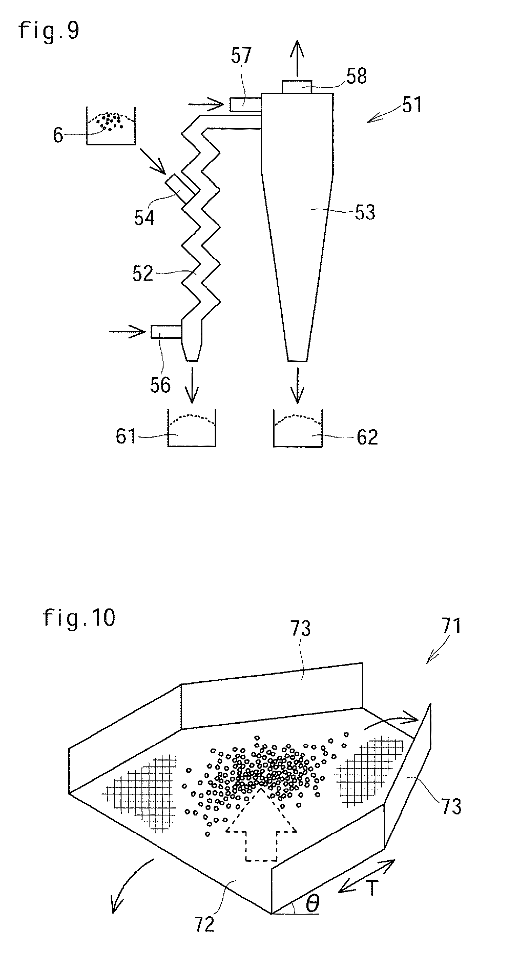

For the segregation of the filler into the hard filler and the soft filler can be used a wind power separator as shown in Fig. 9. The wind power separator 51 is generally composed of an oblong separation pipe 52 having a serpentine path and a cyclone separator 53 connected to an upper end of the separation pipe 52. The separation pipe 52 is formed of a serpentine pipe having ten-odd bends and stood vertically in general, and an input port 54 for input of the filler is provided on a bend next lower but several to top. From blowers not shown, air is supplied to an air supply pipe 56 provided on lower end part of the separation pipe 52 and to an air supply pipe 57 provided on upper end part of the cyclone separator 53. On an upper end face of the cyclone separator 53 is provided an exhaust pipe 58, from which exhaust is returned to the blowers. Quantities of the air blow to the separation pipe 52 and the cyclone separator 53 can be adjusted according to material of the filler.

The wind power separator 51 functions as follows. Initially, filler 6 is put into the separation pipe 52 through the input port 54. By upward air flow in the separation pipe 52, the inputted filler is segregated into black rubber chips of soft filler and silica sand of hard filler. Even if the inputted filler has been agglomerate, the filler is loosened by colliding with the plurality of bends while falling down in the separation pipe 52, and is segregated into the soft filler and the hard filler by the air flow. The soft filler is guided to the cyclone separator 53 by the air flow, while the hard filler falls downward in the separation pipe 52. The air having guided the soft filler to the cyclone separator 53 merges with air from the air supply pipe 57 and makes swirl flow in upper part of the cyclone separator 53. The soft filler having received centrifugal forces from the swirl flow separates from the air of the swirl flow and falls downward. The air from which the soft filler has separated undergoes weakening of the swirl flow while flowing downward in the cyclone separator 53. After that, the air flows upward in vicinity of a center axis of the cyclone separator, is discharged through the exhaust pipe 58, and is sucked into the blowers. Thus the hard filler 61 is discharged from the lower end of the separation pipe 52 and the soft filler 62 is discharged from a lower end of the cyclone separator 53. The silica sand of the hard filler is reused for new artificial turf, and the black rubber chips of the soft filler are disposed of.

Thus the segregation and removal of the soft filler derived from waste tires can resolve the problems such as the environmental pollution and the temperature increase.

On condition that the soft filler contains thermoplastic resin chips of polyolefin or the like as well as black rubber chips derived from waste tires, it is necessary to segregate and remove only the black rubber chips from the filler. In this case, use of an air table as shown in Fig. 10 makes it possible to segregate silica sand as the hard filler, the black rubber chips, and the thermoplastic resin chips. The air table 71 has filter apertures with specified sizes and includes a mesh table 72 placed at a specified angle θ of inclination to the horizontal, air nozzles for blowing air with a specified velocity of flow toward the mesh table 72 from below, and a vibration applying device for vibrating the mesh table 72. The mesh table 72, having a trapezoidal shape in plan view, is placed so as to be inclined with a long side being in lower position and a short side, facing the long side, being in upper position. On both side edges of the mesh table 72 are provided wall bodies 73 for preventing the filler from falling down. The filter apertures of the mesh table 72 have diameters of 3 to 5 mm. Preferably, the angle θ of inclination of the mesh table 72 is of 3 to 10°, the velocity of the air flow from the air nozzles being of 0.5 to 3 m/s, a number of vibrations of the mesh table 72 caused by the vibration applying device being of 400 to 600/min.

The air table 71 functions as follows. Initially, the upward air flow is provided from below the mesh table 72, and the mesh table 72 is vibrated in a plane and in directions in which the long side and the short side face each other, as shown by an arrow T. Subsequently, the filler is fed onto the mesh table 72. Out of the filler, the silica sand of the hard filler passes through the mesh table 72 and falls down, while the black rubber chips having a large elastic modulus move toward upper side of a slope of the mesh table 72, and the thermoplastic resin chips having a small elastic modulus move toward lower side of the slope of the mesh table 72. Thus the silica sand, the black rubber chips, and the thermoplastic resin chips can be recovered below the mesh table 72, from the short side of the mesh table 72, and the long side of the mesh table 72, respectively. The component materials of the filler can be segregated in accordance with difference in specific gravity thereof by adjustment of the velocity of the air flow from the air nozzles, the angle θ of inclination of the mesh table 72, and the number of vibrations caused by the vibration applying device.

Out of the component materials of the filler obtained by the segregation, in this manner, the black rubber chips can be scrapped, and the silica sand and the thermoplastic resin chips can be reused, so that effective recycling can be attained while the problems such as environmental pollution can be resolved.

Though the embodiments of the invention have been described above, it is a matter of course that the invention is not limited to the embodiments described above and can be modified in various ways without departing from the purport of the invention. For instance, the artificial turf processing apparatus may be formed by installation of the shredder 11 and the like on a pedestal on a trailer having no prime motor and having non-driving wheels, instead of the artificial turf processing apparatus formed by the installation of the shredder 11 and the like on the pedestal 10 on the truck having a prime motor. That is, the running gears mounted on the pedestal may be either wheels driven by a prime motor or wheels not driven. There may be employed other types of running gears such as endless tracks. The pedestal is not limited to a single pedestal but there may be used a plurality of pedestals. Namely, the shredder 11, the segregator 12, and the drier 13 may separately be installed on the plurality of pedestals having running gears. Alternatively, a plurality of implements such as the shredder 11, the segregator 12, the drier 13, the dust collector 15, and the hydraulic unit 16 may be divided into some groups, which may be distributed to and installed on the different pedestals. There may be used the shredder other than the one-shaft type, the segregator other than the centrifugal type, and/or the drier other than the band type.

## Claims

1. A method of replacing artificial turf having artificial turf bodies including base fabrics and pile fixed by fixation material to the base fabrics, and granular filler for filling therewith between the pile of the artificial turf bodies, the method comprising:
a removal step of removing the artificial turf from a laying surface,
a recovery step of recovering the filler from the artificial turf in vicinity of the laying surface of the artificial turf by a movable artificial turf processing apparatus,
a laying step of laying new artificial turf bodies on the laying surface, and
a filling step of filling the new artificial turf bodies with the filler between pile, the filler recovered in the recovery step.

2. The artificial turf replacing method as claimed in Claim 1, wherein
filler reclaimed from waste artificial turf bodies is added to the filler for the filling in the filling step.

3. The artificial turf replacing method as claimed in Claim 1, wherein
the recovery step comprises:
a shredding step of shredding the artificial turf, and
a segregation step of segregating the shredded artificial turf into shredded pieces of the artificial turf bodies and the filler.

4. The artificial turf replacing method as claimed in Claim 3, further comprising
a removal step of removing filler, derived from waste tires, from the filler segregated in the segregation step.

5. An artificial turf processing apparatus for processing removed artificial turf in vicinity of a laying surface for the artificial turf, for replacement of the artificial turf having artificial turf bodies including base fabrics and pile fixed by fixation material to the base fabrics, and granular filler with which the artificial turf bodies are filled between the pile, the apparatus comprising:
a pedestal having running gears,
a shredder for shredding the artificial turf, the shredder installed on the pedestal,
a segregator for segregating the artificial turf shredded by the shredder, into shredded pieces of the artificial turf bodies and the filler, the segregator installed on the pedestal, and
a drier for drying the filler segregated by the segregator, the drier installed on the pedestal.

6. The artificial turf processing apparatus as claimed in Claim 5, wherein
the shredder is a one-shaft type shredder comprising:
a casing,
one rotation shaft that is placed in the casing and that has rotating edged tools fixed onto an outer circumferential surface thereof,
fixed edges that are fixed in the casing so as to face the rotation shaft, and
a screen which is placed on outer circumferential side of the rotation shaft and on which filter apertures with specified sizes are formed.

7. The artificial turf processing apparatus as claimed in Claim 6, wherein
the shredder has slant grooves, extending toward a center of axial directions of the rotation shaft with respect to a direction opposed to a direction of rotation of the rotation shaft, on outer circumferential surfaces of end parts of the rotation shaft.

8. The artificial turf processing apparatus as claimed in Claim 5, wherein
the segregator is a centrifugal-separation type segregator comprising:
a casing having an input port for the shredded artificial turf on one end part, and an outlet for the shredded pieces of the artificial turf bodies and an outlet for the filler, on the other end part,
a segregation chamber which is formed in the casing and in which a screen having filter apertures with specified sizes is provided on a portion of a wall surface thereof, and
rotation blades which are accommodated in the segregation chamber and which cause the shredded artificial turf to rotate while conveying the turf toward the other end side.

9. The artificial turf processing apparatus as claimed in Claim 8, wherein
the segregator is formed so as to heat at least the filler by heated air produced by a heat source common to the drier.

10. The artificial turf processing apparatus as claimed in Claim 5, wherein
a moisture content of the filler dried by the drier is not more than 5 wt%.
